# EUROPÄISCHE PATENTSCHRIFT

(11) **EP 1 851 141 B1**
(45) Veröffentlichungstag und Bekanntmachung des Hinweises auf die Patenterteilung: **01.07.2009**
(21) Anmeldenummer: 06829147.5
(22) Anmeldetag: 28.11.2006
(51) Int. Cl.: B65G 1/04

(54) **LAGERLIFTANORDNUNG**
WAREHOUSE-LIFT ARRANGEMENT
SYSTEME D'ASCENSEURS D'ENTREPOT

(30) Priorität: 22.02.2006 DE 102006008932
(43) Veröffentlichungstag der Anmeldung: 07.11.2007
(73) Patentinhaber: Bellheimer Metallwerk GmbH, 76756 Bellheim (DE)
(72) Erfinder: GARBERS, Hartmut, 61348 Bad Homburg (DE)
(74) Vertreter: Grünecker, Kinkeldey, Stockmair & Schwanhäusser Anwaltssozietät
(86) Internationale Anmeldenummer: PCT/EP2006/011372
(87) Internationale Veröffentlichungsnummer: WO 2007/098797

(56) Entgegenhaltungen:
- WO-A-20/06010550
- FR-A- 2 115 486

## Beschreibung

### Technisches Gebiet

Die Erfindung betrifft eine Lagerliftanordnung mit zwei hintereinander angeordneten Lagerliften, die jeweils zwei sich gegenüberliegende Regalsäulen aufweisen, welche Schächte begrenzen, in denen mit einer Horizontalfördereinrichtung versehene Vertikalförderer angeordnet sind, die zum Ein- und Auslagern von Lagergutträgem in Lagerplätze der Regalsäulen dienen, wobei der vordere Lagerlift mit einer Beschickungs- und Entnahmeöffnung versehen ist und wobei in der hinteren Regalsäule des vorderen Lagerliftes und in der ihr zugewandten vorderen Regalsäule des hinteren Lagerliftes mindestens eine Transfereinheit angeordnet ist, die eine Überführung von Lagergutträgem aus dem Bereich des vorderen Lagerliftes in den Bereich des hinteren Lagerliftes und zurück ermöglicht.

### Stand der Technik

Aus dem Prospektblatt "Innovation in der Lagerlogistik" der Kardex Organisationssysteme GmbH XPdouble/D/113.000109.05/PD-GWO ist ein Lagerlift der vorstehenden Art bekannt, bei dem in den zwischen den sich jeweils gegenüberliegenden Regalsäulen vorhandenen Schächten jeweils ein Vertikalförderer mit einer Horizontalfördereinrichtung auf- und abbewegbar ist und bei dem die Lagerlifte durch eine Transfereinheit miteinander verbunden sind, um von der Beschickungs- und Entnahmeöffnung der vorderen Lagerlifte auch Waren in den hinteren Lagerlift einlagern bzw. aus letzterem auslagern zu können. Um also z. B. einen Auslagervorgang durchführen zu können, muss der Vertikalförderer des hinteren Lagerlifles zunächst in eine Position überführt werden, in der eine Lagergutübergabe durch seine Horizontalfördereinrichtung auf die Transfereinheit erfolgen kann. Anschließend kann von der Transfereinheit eine Lagergutübergabe auf die Horizontalfördereinrichtung des Vertikalförderers des vorderen Lagerliftes erfolgen, die gewissermaßen eine Brücke zur Beschickungs- und Entnahmeöffnung bildet. Während die Horizontalfördereinrichtung des Vertikalförderers des vorderen Lagerliftes ihre Brückenfunktion erfüllt, kann sie naturgemäß keine Lagerplätze dieses Lagerliftes anfahren. Für den Fall, dass der sich im Bereich der Beschickungs- und Entnahmeöffnung befindliche Lagergutträger nach einer Lagergutentnahme an seinen alten Platz zurückbefördert werden soll, ist bei Vorhandensein nur einer Transfereinheit auch der zweite Vertikalförderer praktisch blockiert. Die durch die Blockade bedingte Totzeit lässt sich durch die Schaffung einer zusätzlichen, als Puffer nutzbaren Transfereinheit reduzieren. Eine Verzögerung der Be- bzw. Entladevorgänge muss jedoch auch in diesem Fall in Kauf genommen werden. Die geschilderten Umstände stellen insbesondere bei Lagerliften großer Höhe insofern einen Nachteil dar, als die Zeiten, die der Vertikalförderer des vorderen Lagerliftes in der Brückenposition verharrt und die er benötigt, um von der Beschickungs- und Entnahmeöffnung zu einem weit entfernten Lagerplatz und zurück zu gelangen, sich addieren, falls im Anschluss an die Ausübung einer Brückenfunktion Lagergut im oberen Bereich des vorderen Lagerliftes ein- oder ausgelagert werden soll.

Eine derartige Lagerliftanordnung ist bereit aus der FR-A-2 115 486 bekannt. Die FR-A-2 115 486 offenbart den Oberbegriff des Anspruches 1.

### Darstellung der Erfindung

Der Erfindung liegt die Aufgabe zugrunde, die sogenannte Zugriffszeit bei Lagerliftanordnungen der in Betracht gezogenen Art zu verkürzen, d. h. Totzeiten möglichst klein zu halten. Gelöst wird die gestellte Aufgabe bei einer gattungsgemässen Lagerliftanordnung erfindungsgemäss dadurch, dass zum Überführen von Lagergutträgern vom einen Lagerlift zum anderen Lagerlift zwei im Abstand voneinander und übereinander angeordnete Paare von Transfereinheiten dienen und dass im vorderen Lagerlift zwei mit Horizontalfördereinrichtungen versehene Vertikalförderer vorgesehen sind.

Die erfindungsgemäße Lagergutanordnung bietet den Vorteil, dass durch den zusätzlichen Vertikalförderer im vorderen Lagerlift und durch die Verknüpfung des vorderen Lagerliftes mit dem hinteren Lagerlift über zwei Transfereinheiten-Paare eine ununterbrochene Versorgung der Transfereinheiten mit Lagergutträgem möglich ist und letztere unter Einhaltung kurzer Taktzeiten aus einer der Transfereinheiten des unteren Transfereinheiten-Paares in der Beschickungs- und Entnahmeöffnung bereit gestellt bzw. wieder aus ihr entfernt werden können.

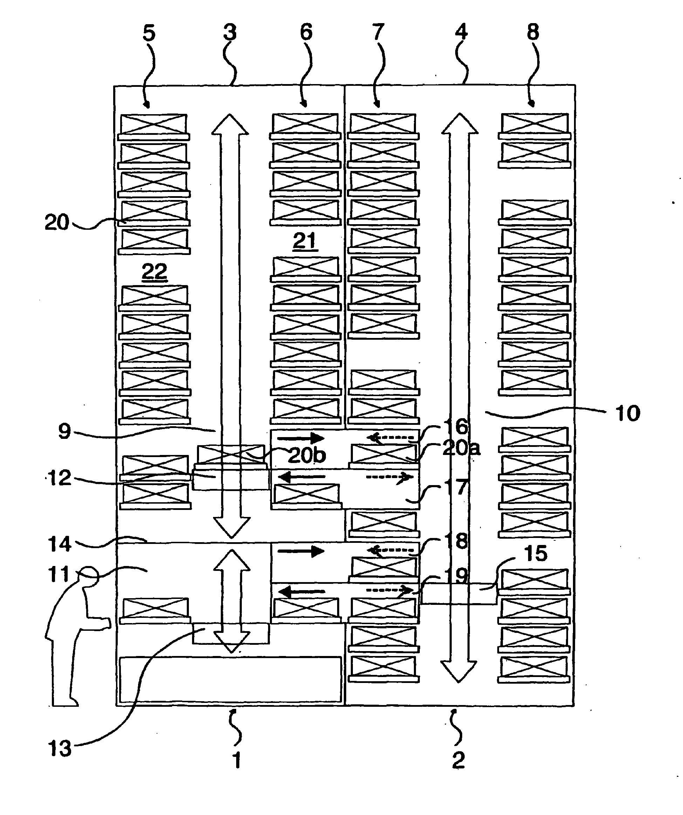

Weitere Merkmale und Einzelheiten der Erfindung ergeben sich aus den Unteransprüchen und der nachstehenden Beschreibung einer in der beigefügten Zeichnung dargestellten, besonders zweckmäßigen Lagerliftanordnung.

### Wege zur Ausführung der Erfindung

In der Zeichnung sind 1 und 2 zwei hintereinander angeordnete Lagerlifte, deren grundsätzlicher Aufbau bekannt ist. Beide Lagerstifte 1 und 2 weisen ein Gehäuse 3 bzw. 4 auf, in dem jeweils zwei sich gegenüberliegende Regalsäulen 5, 6 bzw. 7, 8 mit übereinanderliegenden Lagerplätzen angeordnet sind. Die Regalsäulen 5 und 6 bzw. 7 und 8 begrenzen jeweils einen Schacht 9 bzw. 10. Im Schacht 9 des mit einer Beschickung- und Entnahmeöffnung 11 versehenen Lagerliftes 1 sind auf und abbewegbar zwei Vertikalförderer 12 und 13 geführt, deren Verfahrwege durch eine Zwischendecke 14 begrenzt sind. Ein dritter, im Schacht 10 auf- und abbewegbarer Vertikalförderer 15 lässt sich über die gesamte Höhe des Lagerliftes 2 verfahren.

Die hintere Regalsäule 6 des vorderen Lagerliftes 1 und die vordere Regalsäule 7 des hinteren Lagerliftes 2 stehen über vier paarweise übereinander angeordnete Transfereinheiten 16, 17 und 18, 19 miteinander in Verbindung. Mit Hilfe der Transfereinheiten 16 bis 19 lassen sich Lagergutträger 20 aus dem Lagerlift 1 in den Lagerlift 2 und zurück überführen. Die Transfereinheiten 16 bis 19 können dabei als Puffer genutzt werden, in die bzw. aus denen Lagergutträger 20 während der Beschickung oder Entleerung eines in der Beschickungs- und Entnahmeöffnung 11 verweilenden Lagergutträgers 20 ein- und ausgelagert werden. Es besteht mit anderen Worten die Möglichkeit, die Zeit zu nutzen, während derer der Vertikalförderer 13 in der in der Zeichnung dargestellten Position verharrt, um so mit Hilfe des Vertikalförderers 12 z. B. aus dem Lagerplatz 21 einen Lagergutträger 20a und aus dem Lagerplatz 22 einen Lagergutträger 20b in den Bereich der Transfereinheit 16 zu überführen, von wo aus sie anschließend beide durch den Vertikalförderer 15 in den Bereich der Transfereinheit 19 weiterleitbar sind. Verlustzeiten, die bei Verwendung nur eines Vertikalförderers im Lagerlift 1 unvermeidbar wären, werden auf diese Art und Weise vermieden. Der Vertikalförderer 13, der ebenso wie die Vertikalförderer 12 und 15 in bekannter Weise mit einer Horizontalfördereinrichtung ausgestattet ist, stellt gewissermaßen eine Art Hubbrücke dar, die einerseits den Zwischenraum zwischen der Transfereinheit 19 und der Beschickungs- und Entnahmeöffnung 11 überbrückt und andererseits die Transfereinheit 18 mit einzulagernden Lagergutträgem 20 beschickt.

Die Horizontalfördereinrichtung der Transfereinheiten 16 -19 lässt sich, wie durch gegenläufige Pfeile angedeutet, ändern.

## Patentansprüche

1. Lagerliftanordnung mit zwei hintereinander angeordneten Lagerliften (1, 2), die jeweils zwei sich gegenüberliegende Regalsäulen (5, 6 bzw. 7, 8) aufweisen, welche Schächte (9, 10) begrenzen, in denen mit einer Horizontalfördereinrichtung versehene Vertikalförderer (13, 15) angeordnet sind, die zum Ein- und Auslagern von Lagergutträgern (20) in Lagerplätze der Regalsäulen (5 - 8) dienen, wobei der vordere Lagerlift (1) mit einer Beschickungs- und Entnahmeöffnung (11) versehen ist und wobei in der hinteren Regalsäule (6) des vorderen Lagerliftes (1) und in der ihr zugewandten vorderen Regalsäule (7) des hinteren Lagerliftes (2) mindestens eine Transfereinheit (19) angeordnet ist, die eine Überführung von Lagergutträgem (20) aus dem Bereich des vorderen Lagerliftes (1) in den Bereich des hinteren Lagerliftes (2) und zurück ermöglicht, **dadurch gekennzeichnet, dass** zum Überführen von Lagergutträgern (20) vom einen Lagerlift (1) zum anderen Lagerlift (2) zwei im Abstand voneinander und übereinander angeordnete Paare von Transfereinheiten (16, 17; 18, 19) dienen und dass im vorderen Lagerlift (1) zwei mit Horizontalfördereinrichtungen versehene Vertikalförderer (12, 13) vorgesehen sind.

2. Anordnung nach Anspruch 1, **dadurch gekennzeichnet, dass** der Verfahrweg des unteren Vertikalförderers (13) im vorderen Lagerlift (1) auf den Bereich des unteren Paares der Transfereinheiten (18, 19) begrenzt ist.

3. Anordnung nach Anspruch 1 oder 2, **dadurch gekennzeichnet, dass** der Verfahrweg des oberen Vertikalförderers (12) der im vorderen Lagerlift (1) angeordneten Vertikalförderer (12, 13) auf einen Bereich oberhalb der beiden unteren Transfereinheiten (18, 19) begrenzt ist.

4. Anordnung nach einem der Ansprüche 1 bis 3, **dadurch gekennzeichnet, dass** die Transfereinheiten (16 - 19) Transferbewegungen in gegenläufige Richtungen ausführen können.

5. Anordnung nach einem der Ansprüche 1 bis 4, **dadurch gekennzeichnet, dass** den Lagergutträgem (20) in den Regalsäulen (5 - 8) feste Plätze zugeordnet sind.

## Claims

1. Warehouse lift arrangement with two warehouse lifts (1, 2) arranged one behind the other, which each have two oppositely located columns of shelves (5, 6 respectively 7, 8), which limit shafts (9, 10), in which vertical conveyors (13, 15) fitted with a horizontal conveying device are arranged, which are used for storing and removing stored-goods carriers (20) in the storage locations of the columns of shelves (5 - 8), wherein the front warehouse lift (1) is provided with a loading and unloading opening (11) and wherein in the rear column of shelves (6) of the front warehouse lift (1) and in the front column of shelves (7) of the rear warehouse lift (2) facing the rear column of shelves (6) at least one transfer unit (19) is arranged, which facilitates the transfer of stored-goods carriers (20) from the region of the front warehouse lift (1) into the region of the rear warehouse lift (2) and back, **characterised in that** two pairs of transfer units (16, 17; 18, 19) arranged at a distance from one another and one above the other are used to transfer stored-goods carriers (20) from one warehouse lift (1) to the other warehouse lift (2) and that two vertical conveyors (12, 13) fitted with horizontal conveying devices are provided in the front warehouse lift (1).

2. Arrangement according to Claim 1, **characterised in that** the travel path of the lower vertical conveyor (13) in the front warehouse lift (1) is limited to the region of the lower pair of transfer units (18, 19).

3. Arrangement according to Claim 1 or 2, **characterised in that** the travel path of the upper vertical conveyor (12) of the vertical conveyors (12, 13) arranged in the front warehouse lift (1) is limited to a region above the two lower transfer units (18, 19).

4. Arrangement according to one of the Claims 1 to 3, **characterised in that** the transfer units (16-19) can execute transfer movements in opposing directions.

5. Arrangement according to one of the Claims 1 to 4, **characterised in that** fixed locations in the columns of shelves (5 - 8) are assigned to the stored-goods carriers (20).

## Revendications

1. Système élévateur de stockage avec deux élévateurs de stockage (1, 2) agencés l'un derrière l'autre, qui présentent respectivement deux colonnes de rayonnages opposées (5, 6 ou 7, 8), qui délimitent des puits (9, 10), dans lesquels sont agencés des convoyeurs verticaux (13, 15) pourvus d'un dispositif de transport horizontal, convoyeurs verticaux qui servent au stockage et au déstockage de supports de produits stockés (20) dans des emplacements de stockage des colonnes de rayonnages (5 à 8), dans lequel l'élévateur de stockage avant (1) est pourvu d'une ouverture de chargement et d'enlèvement (11) et dans lequel, dans la colonne de rayonnages arrière (6) de l'élévateur de stockage avant (1) et dans la colonne de rayonnages avant (7), tournée vers celle-ci, de l'élévateur de stockage arrière (2) il est agencé au moins une unité de transfert (19) qui permet un transfert de supports de produits stockés (20) de la zone de l'élévateur de stockage avant (1) dans la zone de l'élévateur de stockage arrière (2) et inversement, **caractérisé en ce que**, pour transférer des supports de produits stockés (20) d'un élévateur de stockage (1) à l'autre élévateur de stockage (2), on se sert de deux paires d'unités de transfert (16, 17 ; 18, 19) agencées à distance l'une de l'autre et l'une au-dessus de l'autre et **en ce que** l'élévateur de stockage avant (1) présente deux convoyeurs verticaux (12, 13) pourvus de dispositifs de transport horizontal.

2. Système selon la revendication 1, **caractérisé en ce que** le trajet de déplacement du convoyeur vertical inférieur (13) dans l'élévateur de stockage avant (1) est limité à la zone de la paire inférieure des unités de transfert (18,19).

3. Système selon la revendication 1 ou 2, **caractérisé en ce que** le trajet de déplacement du convoyeur vertical supérieur (12) des convoyeurs verticaux (12, 13) agencés dans l'élévateur de stockage avant (1) est limité à une zone au-dessus des deux unités de transfert inférieures (18, 19).

4. Système selon l'une quelconque des revendications 1 à 3, **caractérisé en ce que** les unités de transfert (16 à 19) peuvent réaliser des déplacements de transfert dans des sens contraires.

5. Système selon l'une quelconque des revendications 1 à 4, **caractérisé en ce que** des places fixes sont affectées aux supports de produits stockés (20) dans les colonnes de rayonnages (5 à 8).
